# EUROPEAN PATENT APPLICATION

(11) **EP 4 760 515 A1**
(43) Date of publication of application: **17.06.2026**
(21) Application number: 25222842.4
(22) Date of filing: 12.12.2025
(51) Int. Cl.: G06F 13/16, G06F 13/40

(54) **APPARATUS BEING ABLE TO CONNECTING AT LEAST TWO DEVICES BY DIFFERENT INTERFACES AND METHOD FOR CONTROLLING THE SAME**

(30) Priority: 13.12.2024 KR 20240186075; 02.10.2025 KR 20250145044
(71) Applicant: LX Semicon Co., Ltd., Daejeon 34027 (KR)
(72) Inventor: HAN, Ji Woong, 34027 Daejeon (KR); KIM, Ji Seok, 34027 Daejeon (KR); LEE, Dae Hwan, 34027 Daejeon (KR); SONG, Jun Ho, 34027 Daejeon (KR); OH, Pyeong Keun, 34027 Daejeon (KR)
(74) Representative: Goddar, Heinz J.

(57) **Abstract**

A method of controlling an apparatus connectable to at least two different devices through different interfaces according to one embodiment of the present disclosure includes receiving a first clock signal from a system through a first clock line that is unidirectional, transmitting and receiving first data to and from the system through a first data line that is bidirectional, transmitting the first clock signal to one or more target devices through a second clock line that is unidirectional, transmitting and receiving second data to and from the one or more target devices through a second data line that is bidirectional, and determining, based on a specific condition, whether to transmit the first data to the one or more target devices or to transmit the second data to the system.

## Description

### BACKGROUND

### Field of the Invention

Embodiments of the present disclosure are applicable to various memory technologies. For example, the embodiments of the present disclosure are applicable to double data rate 5 (DDR5) technology and the like but are not necessarily limited thereto.

### Discussion of the Related Art

Double data rate (DDR) technology is one technology related to random access memories (RAMs) used in computers and electronic devices.

DDR technology is a method of transmitting data at both rising and falling edges of a clock cycle. In conventional single data rate (SDR) technology, data is transmitted only at a rising edge, and thus DDR has the advantage of realizing twice a data transfer rate at the same clock frequency.

Meanwhile, first-generation double data rate (DDR1) technology supports a data transfer rate of approximately 200 to 400 MT/s, second-generation DDR (DDR2) technology supports a data transfer rate of approximately 400 to 800 MT/s, third-generation DDR (DDR3) technology supports a data transfer rate of approximately 800 to 2133 MT/s, fourth-generation DDR (DDR4) technology supports a data transfer rate of approximately 1600 to 3200 MT/s, and the most recent fifth-generation DDR (DDR5) technology has been improved to support a data transfer rate of approximately 4800 to 8400 MT/s.

In addition, a serial presence detect (SPD) part used in DDR memory may be embedded in, for example, a small electrically erasable programmable read-only memory (EEPROM) chip attached to a dynamic random access memory dual in-line memory module (DRAM DIMM). Furthermore, the SPD part provides information that allows a motherboard or a memory controller to correctly identify the memory module and ensure stable operation.

While a single interface is used inside the memory up to DDR4 technology, a plurality of different types of interfaces (for example, a host interface/local interface) have been used inside the memory in DDR5 technology.

### SUMMARY

One embodiment of the present disclosure is directed to more clearly defining the role of a hub for mediating among a plurality of different interfaces, when the interfaces are used inside a memory, such as in fifth-generation double data rate (DDR5) technology.

One embodiment of the present disclosure is also directed to providing a method of distinguishing external input states while maintaining data transmission on high-speed data (HSDA)/low-speed data (LSDA) bus lines.

According to an aspect of the present disclosure, there is provided a method of controlling an apparatus connectable to at least two different devices through different interfaces, which includes receiving a first clock signal from a system through a first clock line that is unidirectional, transmitting and receiving first data to and from the system through a first data line that is bidirectional, transmitting the first clock signal to one or more target devices through a second clock line that is unidirectional, transmitting and receiving second data to and from the one or more target devices through a second data line that is bidirectional, and determining, based on a specific condition, whether to transmit the first data to the one or more target devices or to transmit the second data to the system.

For example, the method may further include generating a second clock signal different from the first clock signal when the first clock signal is received from the system through the first clock line that is unidirectional.

For example, the method may further include disabling signal transmission operations of the first data line and the second data line during a period in which the second clock signal is high.

For example, the specific condition may include a time point at which the second clock signal ends.

For example, the method may further include transmitting the first data received through the first data line to the one or more target devices through the second data line when a signal on the second data line is in a high state at the time point at which the second clock signal ends.

For example, the method may further include transmitting the second data received through the second data line to the system through the first data line when the signal on the second data line is in a low state at the time point at which the second clock signal ends.

According to another aspect of the present disclosure, there is provided an apparatus connectable to at least two different devices through different interfaces, which includes a first unidirectional clock line configured to receive a first clock signal from a system, a first bidirectional data line configured to transmit and receive first data to and from the system, a second unidirectional clock line configured to transmit the first clock signal to one or more target devices, a second bidirectional data line configured to transmit and receive second data to and from the one or more target devices, and a controller configured to determine, based on a specific condition, whether to transmit the first data to the one or more target devices or to transmit the second data to the system.
The apparatus as disclosed herein may implement any one, some or all of the features that are described with respect to the method as disclosed herein, unless technically inappropriate or indicated otherwise. Also, the method as disclosed herein may implement any one, some or all of the features that are described with respect to the apparatus as disclosed herein, unless technically inappropriate or indicated otherwise.

### BRIEF DESCRIPTION OF THE DRAWINGS

The accompanying drawings, which are included to provide a further understanding of the disclosure and are incorporated in and constitute a part of this application, illustrate embodiments of the disclosure and together with the description serve to explain the principle of the disclosure. In the drawings:
FIG. 1 is a block diagram schematically illustrating double data rate 4 (DDR4) according to a related art;
FIG. 2 is a block diagram schematically illustrating DDR5 according to one embodiment of the present disclosure;
FIG. 3 is a diagram illustrating FIG. 2 in more detail;
FIG. 4 is a timing diagram of data and clock lines shown in FIG. 3;
FIG. 5 is a block diagram illustrating a hub shown in FIG. 2 or FIG. 3 in more detail;
FIG. 6 is a timing diagram illustrating a case in which data is transmitted from a host device to a local device according to one embodiment of the present disclosure; and
FIG. 7 is a timing diagram illustrating a case in which data is transmitted from the local device to the host device according to one embodiment of the present disclosure.

### DETAILED DESCRIPTION OF THE DISCLOSURE

Throughout the specification, like reference numerals refer to substantially like components. In the following description, detailed descriptions of configurations and functions not related to a core configuration of the present disclosure and known in the art may be omitted. The terms used in this specification should be understood as follows.

Advantages and features of the present disclosure and implementation methods thereof will be clarified through the following embodiments described with reference to the accompanying drawings. However, the present disclosure is not limited to embodiments disclosed below and is realized in various other forms. The present embodiments make the disclosure of the present disclosure complete and are provided to completely inform one of ordinary skill in the art to which the present disclosure pertains of the scope of the disclosure. The present disclosure is defined only by the scope of the claims.

The figures, dimensions, ratios, angles, numbers, and the like disclosed in the drawings for describing the embodiments of the present disclosure are merely illustrative and are not limited to matters shown in the present disclosure. Throughout the specification, like reference numerals refer to like elements. Further, in describing the present disclosure, detailed descriptions of well-known technologies will be omitted when it is determined that they may unnecessarily obscure the gist of the present disclosure.

Terms such as "including," "having," and "composed of" used herein are intended to allow other elements to be added unless the terms are used with the term "only." Any references to the singular may include the plural unless expressly stated otherwise.

Components shall be interpreted to include allowable tolerances unless otherwise specified.

For the description of a positional relationship, for example, when the positional relationship between two parts is described as "on," "above," "below," "next to," and the like, one or more parts may be interposed therebetween unless the term "immediately" or "directly" is used in the expression.

For the description of a temporal relationship, for example, when a temporal relationship is described as "after," "subsequently to," "next," "before," and the like, a nonconsecutive case may be included unless the term "immediately" or "directly" is used in the expression.

Although the terms "first," "second," and the like may be used herein to describe various components, the components are not limited by the terms. The terms are only used to distinguish one component from another. Therefore, a first component described below may be a second component within the technological scope of the present disclosure.

When the term "at least one" is used, it should be understood to include all possible combinations of one or more of the associated listed items. For example, the meaning of "at least one of a first item, a second item, and a third item" means a combination of all items that can be presented from two or more of the first item, the second item and the third item as well as each of the first item, the second item or the third item.

The features of various embodiments of the present disclosure can be partially or entirely bonded to or combined with each other and can be interlocked and operated in various ways technically, and the embodiments can be carried out independently of or in association with each other.

Hereinafter, embodiments of the present specification will be described in detail with reference to the accompanying drawings.

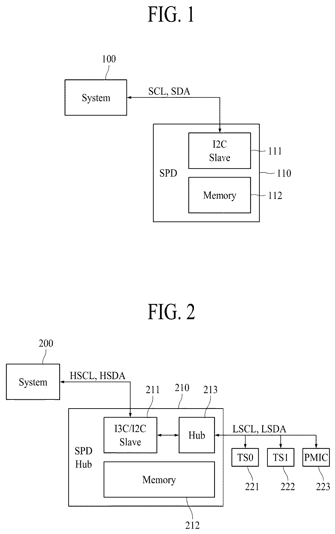

FIG. 1 is a block diagram schematically illustrating double data rate 4 (DDR4) according to a related art.

When implementing DDR4 according to the related art, for example, as shown in FIG. 1, a system 100 and a serial presence detect (SPD) part 110 are required.

Meanwhile, the SPD part 110 may further include an inter-integrated circuit (I2C) slave 111 and a memory 112. Here, the memory 112 may be, for example, an electrically erasable programmable read-only memory (EEPROM).

In addition, the system 100 performs a role of a controller, whereas the SPD part 110 performs a role of a target device.

Further, the system 100 and the SPD part 110 are connected through only a single interface, for example, an I2C interface.

A serial clock line (SCL) shown in FIG. 1 is a line that transmits a clock signal in I2C communication. The system 100, serving as a controller, generates a clock and synchronizes with the SPD part 110, which serves as a target device.

A serial data line (SDA) shown in FIG. 1 is a line that transmits and receives data bidirectionally. In an I2C bus, data is transmitted and received serially one bit at a time through the SDA and SCL lines.

However, whereas the DDR4 shown in FIG. 1 uses a single interface, DDR5, which has been introduced more recently, is designed to use two different interfaces. In addition, an improved inter-integrated circuit (I3C) slave that supports I2C is added to DDR5. Hereinafter, DDR5 to which the present disclosure may be applied will be described in more detail with reference to FIG. 2.

FIG. 2 is a block diagram schematically illustrating DDR5 according to one embodiment of the present disclosure.

An apparatus 210 connectable to at least two different devices through different interfaces according to one embodiment of the present disclosure includes a first transceiver configured to receive a first clock signal from a system 200 through a first clock line that is unidirectional. Here, the first clock line corresponds to, for example, a host SCL (HSCL) shown in FIG. 2. In addition, the first transceiver may be included in a slave 211 shown in FIG. 2. In the present specification, the first clock signal refers to a signal generated by the system 200 and transmitted through, for example, the first clock line such as the HSCL.

Furthermore, the apparatus 210 according to one embodiment of the present disclosure includes a second transceiver configured to transmit and receive first data to and from the system 200 through a first data line that is bidirectional. Here, the first data line corresponds to, for example, the host SDA (HSDA) shown in FIG. 2. In addition, the second transceiver may be included in the slave 211 shown in FIG. 2.

The above-described HSCL and HSDA lines are connected to the I3C/I2C slave 211 of the apparatus 210.

In addition, the apparatus 210 according to one embodiment of the present disclosure includes a third transceiver configured to transmit the first clock signal to one or more target devices through a second clock line that is unidirectional. Here, the second clock line corresponds to, for example, a local SCL (LSCL) shown in FIG. 2. In addition, the third transceiver may be included in a hub 213 shown in FIG. 2. In addition, the one or more target devices include, for example, a temperature sensor (TS0) 221, a TS1 222, a power management integrated circuit (PMIC) 223, and the like shown in FIG. 2.

Furthermore, the apparatus 210 according to one embodiment of the present disclosure includes a fourth transceiver configured to transmit and receive second data to and from the one or more target devices (for example, 221, 222, and 223 shown in FIG. 2) through a second data line that is bidirectional. Here, the second data line corresponds to, for example, the local SDA (LSDA) shown in FIG. 2. In addition, the fourth transceiver may be included in the hub 213 shown in FIG. 2.

The above-described LSCL and LSDA lines are connected to the hub 213 of the apparatus 210.

In addition, a controller (for example, the hub 213 shown in FIG. 2) of the apparatus 210 is designed to determine, based on a specific condition, whether to transmit the first data to the target devices (221, 222, and 223 shown in FIG. 2) or to transmit the second data to the system 200. That is, the hub 213 is added inside the apparatus 210 to enable communication between individually configured interface buses.

Further, the apparatus 210 may further include a memory 212, and the memory 212 may include, for example, an EEPROM or the like.

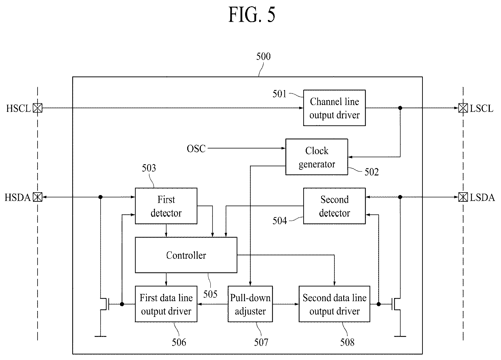

When the first clock signal is received from the system 200 through the first unidirectional clock line (for example, the HSCL shown in FIG. 2), a clock generator (not shown) of the apparatus 210 generates a second clock signal that is different from the first clock signal. This will be described in more detail below with reference to FIGS. 5 to 7 and the like.

For reference, HSCL refers to a signal that is input for communication through a host SCL. In an I2C communication protocol, SDA data is allowed to change only during a period in which the SCL clock is low.

That is, while the SCL remains high, the SDA must maintain its previous value, and thus, an open-clock signal is used to detect a period in which the SCL is low and to check a period in which the SDA changes.

In other words, as described above, the open-clock signal is used to identify a period in which the SCL is low and the SDA signal changes to transmit next data.

When the SCL becomes low and, before the SCL becomes high again, the SDA transitions to 1 or 0 to prepare the next data. Accordingly, in order to detect this section, a high period of the open-clock signal is generated after the SCL becomes low.

The apparatus 210 may further include a pull-down adjuster configured to disable the first data line (e.g., the HSDA shown in FIG. 2) and the second data line (e.g., the LSDA shown in FIG. 2) in the period in which the second clock signal is high. In the present specification, the disabling of the data line may mean, for example, that a pull-down operation is no longer performed. Alternatively, the disabling of the data line may also mean disabling the signal transmission operation of the data line.

This will be described in more detail below with reference to FIGS. 5 to 7 and the like.

The above-described specific condition includes, for example, a time point at which the second clock signal ends.

When the signal of the first data line is in a low state and the signal of the second data line is in a high state at the time point at which the second clock signal ends, the controller (for example, the hub 213 shown in FIG. 2) controls the first data received through the first data line to be transmitted to the one or more target devices through the second data line. This will be described in more detail below with reference to FIGS. 5 to 7 and the like.

When the signal of the first data line is in a high state and the signal of the second data line is in a low state at the time point at which the second clock signal ends, the controller (for example, the hub 213 shown in FIG. 2) controls the second data received through the second data line to be transmitted to the system through the first data line. This will be described in more detail below with reference to FIGS. 5 to 7 and the like.

Alternatively, in another embodiment, the data transmission direction may be determined based only on information on the signal state of the second data line (LSDA), regardless of the signal state of the first data line (HSDA), which also falls within the scope of the present disclosure.

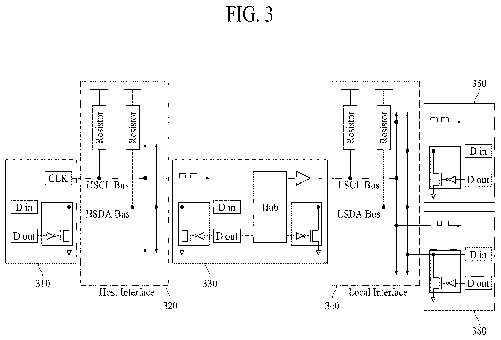

FIG. 3 is a diagram illustrating FIG. 2 in more detail.

A host device 310 shown in FIG. 3 corresponds to, for example, the system 200 shown in FIG. 2.

A device 330 shown in FIG. 3 corresponds to, for example, the apparatus 210 shown in FIG. 2.

Target devices 350 and 360 shown in FIG. 3 correspond, for example, to the target devices 221, 222, and 223 shown in FIG. 2.

The device 330 is connected to the host device 310 through a host interface 320, and the device 330 is connected to the target devices 350 and 360 through a local interface 340.

When the host device 310 outputs a clock signal through an HSCL line, the device 330 serving as a hub receives the clock signal and transmits the clock signal to the target devices 350 and 360 through an LSCL line.

When the host device 310 outputs data through an HSDA line, the device 330 serving as a hub receives the data through the HSDA line and transmits the data to the target devices 350 and 360 through an LSDA line.

Conversely, when the target devices 350 and 360 output data through the LSDA line, the device 330 serving as a hub receives the data through the LSDA line and transmits the data to the host device 310 through the HSDA line.

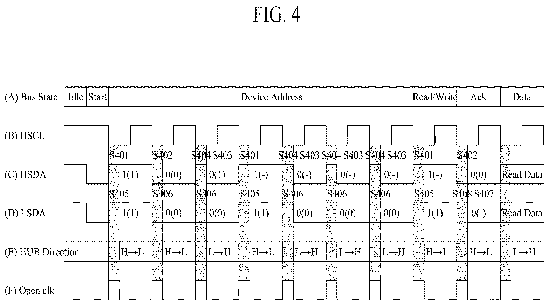

To implement a hub function, a scheme for distinguishing state changes is required while transmitting SDA data of a host device to a local device or transmitting the SDA data of the local device to the host device through the HSDA (host SDA) line and the LSDA (local SDA) line. For example, when data is being transmitted from the host device to the local device, it is necessary to distinguish changes in input states from an external local device or from the host device. This will be described below with reference to FIG. 4 or the like.

FIG. 4 is a timing diagram of the data and clock lines shown in FIG. 3.

FIG. 4A illustrates a bus state. In FIG. 4A, the "Device Address" and "Read/Write" are implemented, for example, as 8 bits in total, and the "Data" is implemented, for example, as 8 bits.

More specifically, I2C is a communication protocol composed of an SCL (clock) line and an SDA (data) line, and these two lines (signals) are configured as a bus shared among multiple devices.

The bus state may be distinguished based on the states of the corresponding signals, and in this case, the bus state is determined based on the two host signals, HSCL and HSDA.

For example, an idle state refers to an input waiting state in which the SCL/SDA lines remain pulled up without any input.

Under this condition, when the SDA line is pulled down while the SCL line remains high, a start state is generated, thereby initiating communication among the connected devices.

In I2C communication, one bit of SDA data is transmitted for each SCL clock, and each communication section, which is followed by one acknowledge (ACK) bit, consists of eight bits.

After a start condition, the I2C communication begins with eight bits of a device address, which consists of a seven-bit slave address and a one-bit read/write bit, and the ACK bit indicates whether the response to the preceding eight bits is normal (low) or abnormal (high).

Thereafter, the data portion also proceeds continuously in units of eight data bits followed by one ACK bit. The Data shown in the drawing may consist of actual data or address data.

LSDA represents a local SDA line and may operate either as an output line that forwards actual HSDA through the hub or as an input line through which an input of the LSDA is transmitted to the HSDA.

LSCL is not shown in the drawing because it is fundamentally synchronized with the HSCL.

A HUB direction is an actual operation to functionally determine whether to maintain the HSDA-to-the LSDA or the LSDA-to-the HSDA.

Open clk represents a period during which both HSDA-to-LSDA and LSDA-to-HSDA operations are disabled for the purpose of controlling the corresponding direction. When the corresponding direction is in an open state (high), the HSDA and the LSDA are isolated from each other.

FIG. 4B illustrates the timing of the HSCL line shown in FIG. 3, FIG. 4C illustrates the timing of the HSDA line shown in FIG. 3, and FIG. 4D illustrates the timing of the LSDA line shown in FIG. 3.

FIG. 4E illustrates a hub direction inside the device 330 shown in FIG. 3 (i.e., whether data is transmitted from the host device (H) to the local device (L) or conversely transmitted from the local device (L) to the host device (H)).

In addition, FIG. 4F illustrates the timing of an open-clock signal generated inside the device 330 shown in FIG. 3.

In particular, during an open-clock period (in a state in which the signal is high), the hub function (i.e., relaying between HSDA-LSDA) is disabled, and the hub direction is determined based on whether an input is present on the LSDA line.

For example, in section S401, the state of the HSDA line is "1" (Hi-Z), and the state of the open-clock signal is irrelevant.

More specifically, in section S401, the HSDA line may be connected to the host device, the hub (the current device), and other devices (such as another hub). This means that multiple devices capable of pulling the HSDA line down are present, but none of the devices are currently pulling the HSDA line down. This also means that the hub does not transmit information on the LSDA to other devices during the open-clock period.

In the drawing, "(1)" represents the current state of the host, and "1" represents the current state of the bus, indicating that the host and the bus are in the same state.

In section S402, the HSDA line is at "0" (pulled-down), and the host device is driving the line.

More specifically, in section S402, the host is pulling the line down to transmit a "0," and the bus is also in the "0" state, the same as the host state. Since the HSDA line remains at "0," the hub recognizes that there is an input on the HSDA line.

However, in section S403, although the HSDA line is at "0" (pulled-down), the LSDA line is driven because the open-clock signal is low ("0").

More specifically, in section S403, the host does not pull the line down and attempts to output "(1)," but the bus actually operates at "0" because the "0" on the LSDA line is transmitted to the host by the hub function that forwards the LSDA to the host.

In this case, since the host detects that its output "(1)" is different from the bus state "0," the host recognizes that the host has lost control of the bus. Accordingly, the host no longer continues driving the HSDA bus.

In addition, in section S404, the state of the HSDA line remains "1" (Hi-Z), and since the open-clock signal is high "(1)," the LSDA line is not driven.

Meanwhile, in section S405, the state of the LSDA line is "1" (high-impedance), and the state of the open-clock signal is irrelevant.

In section S406, the state of the LSDA line is "0" (pulled-down), and the local device is driving the line.

More specifically, in section S406, a "(0)" (pull-down) is generated by the local device connected to the LSDA line, and thus the bus remains at "0" regardless of the states of the hub or the host.

However, in section S407, although the state of the LSDA line is "0" (pulled-down), the HSDA line is driven because the open-clock signal is low ("0").

More specifically, section S407 corresponds to an ACK period. Under an 8-bit device address, the host device disables control of the bus and the local device takes control, and thus, the local device requests an ACK from the host device.

At this time, the local device remains in a Hi-Z(-) state and does not participate in the line for the ACK, while the host device provides a proper response ("0") for the ACK. As a result, both the HSDA and LSDA buses transition to "0." That is, the operation state is in the HSDA-to-LSDA direction.

In addition, in section S408, the state of the LSDA line remains at "1" (Hi-Z), and since the open-clock signal is high ("1"), the HSDA line is not driven. The operation in section S408 may correspond, for example, to an operation opposite to that of section S404 described above.

FIG. 5 is a block diagram illustrating the hub shown in FIG. 2 or FIG. 3 in more detail.

A device 500 shown in FIG. 5 may correspond to the hub 213 shown in FIG. 2 or the hub shown in FIG. 3.

As shown in FIG. 5, the device 500 includes a channel line output driver 501, a clock generator 502, a first detector 503, a second detector 504, a controller 505, a first data line output driver 506, a pull-down adjuster 507, a second data line output driver 508, and the like.

The first data line output driver 506 and the second data line output driver 508 control pull-down resistors and output a low signal to a pad. The first data line output driver 506 operates only on an HSDA pad, and the second data line output driver 508 operates only on an LSDA pad.

The first detector 503 and the second detector 504 detect an external input state by checking a pull-down-off signal and a pad state.

The pad state refers to a final bus state determined by, for example, both external input and a hub operation (e.g., the "0" state in "0(1)" shown in FIG. 4).

In addition, an external input state refers to an actual input condition that is independent of an actual pad state, such as the "(1)" state in "0(1)" shown in FIG. 4.

That is, the pad state indicates an actual high/low level of the pad, and the first detector 503 and the second detector 504 detect the external input state by using the operations of the first data line output driver 506 and the second data line output driver 508 and the pad state. After confirming the external input state, the controller 505 determines the direction with priority given to the LSDA input.

Since it is generally more common that the operation proceeds from the host device to the local device, the LSDA line is typically used for output processing.

However, a case in which both the LSDA and HSDA lines are in an input state at the same time may be regarded as a special case, and because the HSDA line is driven much more frequently, LSDA input may be given priority when simultaneous processing is required, while allowing the host device to re-perform its processing with lower priority. The clock generator 502 generates a predetermined period using a counter driven by an oscillator OSC when the LSCL line is in a low state (starting from a falling edge of the signal).

In addition, during the open-clock period, the pull-down adjuster 507 disables the pull-down of the first data line output driver 506 (for example, an HSDA driver) and also disables the pull-down of the second data line output driver 508 (for example, an LSDA driver), thereby maintaining the pad state according to the external input state.

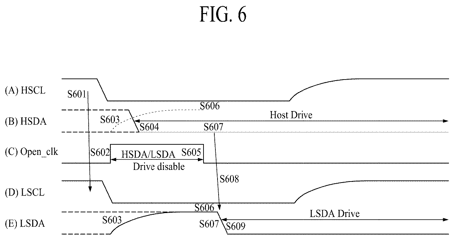

FIG. 6 is a timing diagram illustrating a case in which data is transmitted from the host device to the local device according to one embodiment of the present disclosure. FIG. 6 will now be described with reference to FIG. 5 described above.

In operation S601, the channel line output driver 501 transfers the first clock signal from the HSCL line to the LSCL line.

In operation S602, the clock generator 502 checks the LSCL line and generates the second clock signal (for example, an open-clock signal Open_clk).

In operation S603, the pull-down adjuster 507 disables the HSDA and LSDA drives during an open_clk period. In this state, the HSDA and LSDA lines are placed in a Hi-Z condition (where a rising is expected due to an external pull-up). The open-clock period refers to a state in which the open-clock signal is high, and during this period, the first data line output driver 506 and the second data line output driver 508 are disabled. When the drive is disabled, the HSDA and LSDA lines return to the Hi-Z state due to the external pull-up condition.

In operation S604, the HSDA line is driven low externally as a result of the host device pulling the line down to transmit a logic low to the local device. When the host device drives the HSDA line low and subsequently disables the drive, the HSDA line returns to the Hi-Z state due to an external pull-up configuration.

In operation S605, the open-clock period ("Open_clk") is terminated under the control of the clock generator 502.

In operation S606, the disabled drive by the pull-down adjuster 507 is terminated. That is, this means that the open_clk=high period that has continued since operation S603 is terminated and the drive-disable period is terminated.

In operation S607, the first detector 503 determines that the HSDA line remains low and that the pull-down operation is disabled and thus confirms that the host device is driving the line.

More specifically, since the HSDA line remains low in operation S607, it can be determined that the low is being driven by the host device.

On the other hand, the second detector 504 confirms that there is no drive from the local device by determining that the LSDA line remains high and that the pull-down operation is disabled.

More specifically, from the perspective of the second detector 504, since the LSDA line remains high, it can be determined that the local device is not driving the line low.

In operation S608, the controller 505 determines the direction from the HSDA line to the LSDA line based on the condition determined in operation S607.

More specifically, since the operations of the host device and the local device can be confirmed from the states of the HSDA and LSDA lines, the direction is determined based on the corresponding conditions.

In operation S609, the LSDA line is pull-down driven, and data is transmitted from the HSDA line to the LSDA line.

More specifically, because the data on the HSDA line is transmitted to the LSDA line, the LSDA line is pull-down driven. At this time, based on the state detected by the first detector 503 in operation S607 and provided to the controller 505, the direction has been determined in operation S608, and the pull-down is performed through the second data line output driver 508.

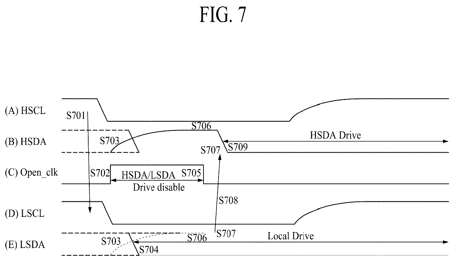

In addition, FIG. 7 is a timing diagram illustrating a case in which data is transmitted from the local device to the host device according to one embodiment of the present disclosure.

In operation S701, the channel line output driver 501 transfers the first clock signal from the HSCL line to the LSCL line.

In operation S702, the clock generator 502 checks the LSCL line and generates the second clock signal (for example, an open-clock signal Open_clk).

In operation S703, the pull-down adjuster 507 disables the HSDA and LSDA drives during an open_clk period. In this state, the HSDA and LSDA lines are placed in a Hi-Z condition (where a rising is expected due to an external pull-up). The open-clock period refers to a state in which the open-clock signal is high, and during this period, the first data line output driver 506 and the second data line output driver 508 are disabled. When the drive is disabled, the HSDA and LSDA lines return to the Hi-Z state due to the external pull-up condition.

In operation S704, the LSDA line is driven low externally as a result of the local device pulling the line down to transmit a logic low to the host device. When the local device drives the LSDA line low and subsequently disables the drive, the LSDA line returns to the Hi-Z state due to an external pull-up configuration.

In operation S705, the open-clock period ("Open_clk") is terminated under the control of the clock generator 502.

In operation S706, the disable drive by the pull-down adjuster 507 is terminated. That is, this means that the open_clk=high period that has continued since operation S703 is terminated and the drive-disable period is terminated.

In operation S707, the second detector 504 determines that the LSDA line remains low and that the pull-down operation is disabled and thus confirms that the local device is driving the line.

More specifically, since the LSDA line remains low in operation S707, it can be determined that the low is being driven by the local device.

On the other hand, the first detector 503 confirms that there is no drive from the host device by determining that the HSDA line remains high and that the pull-down operation is disabled.

More specifically, from the perspective of the first detector 503, since the HSDA line remains high, it can be determined that the host device is not driving the line low.

In operation S708, the controller 505 determines the direction from the LSDA line to the HSDA line based on the condition determined in operation S707.

More specifically, since the operations of the host device and the local device can be confirmed from the states of the HSDA and LSDA lines, the direction is determined based on the corresponding conditions.

In operation S709, the HSDA line is pull-down driven, and data is transmitted from the LSDA line to the HSDA line.

More specifically, because the data on the LSDA line is transmitted to the HSDA line, the HSDA line is pull-down driven. At this time, based on the state detected by the second detector 504 in operation S707 and provided to the controller 505, the direction has been determined in operation S708, and the pull-down is performed through the first data line output driver 506.

It should be understood by those skilled in the art that the present disclosure can be implemented in other specific forms without changing the technical spirit and essential features of the present disclosure.

Further, the methods described herein may be implemented, at least in part, using one or more computer programs or components. The components may be provided as a series of computer instructions on a computer readable medium or machine readable medium, including a volatile or non-volatile memory. The instructions may be provided as software or firmware, and may, in whole or in part, be implemented in a hardware configuration such as application-specific integrated circuits (ASICs), field-programmable gate arrays (FPGAs), digital signal processors (DSPs), or other similar devices. The instructions may be configured to be executed by one or more processors or other hardware configurations, and the processors or other hardware configurations are allowed to perform all or part of the methods and procedures disclosed herein when executing the series of computer instructions.

According to one embodiment of the present disclosure, when a plurality of different interfaces are used inside a memory (e.g., in DDR5 technology or the like), the role of a hub for mediating among the interfaces can be more clearly defined, thereby enabling external input states to be distinguished while maintaining data transmission on HSDA and LSDA bus lines.

In addition to the effects of the present disclosure explicitly described herein, technical effects that a person skilled in the art may infer from the present specification and drawings are also within the scope of other rights of the present disclosure.

Therefore, the above-described embodiments should be understood to be exemplary and not limiting in every aspect. The scope of the present disclosure will be defined by the following claims rather than the above-detailed description, and all changes and modifications derived from the meaning and the scope of the claims and equivalents thereof should be understood as being included in the scope of the present disclosure.

## Claims

1. A method of controlling an apparatus connectable to at least two different devices through different interfaces, the method comprising:
receiving a first clock signal from a system through a first clock line that is unidirectional;
transmitting and receiving first data to and from the system through a first data line that is bidirectional;
transmitting the first clock signal to one or more target devices through a second clock line that is unidirectional;
transmitting and receiving second data to and from the one or more target devices through a second data line that is bidirectional; and
determining, based on a specific condition, whether to transmit the first data to the one or more target devices or to transmit the second data to the system.

2. The method of claim 1, further comprising generating a second clock signal different from the first clock signal when the first clock signal is received from the system through the first clock line that is unidirectional.

3. The method of claim 2, further comprising disabling signal transmission operations of the first data line and the second data line during a period in which the second clock signal is high.

4. The method of claim 3, wherein the specific condition includes a time point at which the second clock signal ends.

5. The method of claim 4, further comprising transmitting the first data received through the first data line to the one or more target devices through the second data line when a signal on the second data line is in a high state at the time point at which the second clock signal ends.

6. The method of claim 5, further comprising transmitting the second data received through the second data line to the system through the first data line when the signal on the second data line is in a low state at the time point at which the second clock signal ends.

7. An apparatus connectable to at least two different devices through different interfaces, the apparatus comprising:
a first transceiver configured to receive a first clock signal from a system through a first clock line that is unidirectional;
a second transceiver configured to transmit and receive first data to and from the system through a first data line that is bidirectional;
a third transceiver configured to transmit the first clock signal to one or more target devices through a second clock line that is unidirectional;
a fourth transceiver configured to transmit and receive second data to and from the one or more target devices through a second data line that is bidirectional; and
a controller configured to determine, based on a specific condition, whether to transmit the first data to the one or more target devices or to transmit the second data to the system.

8. The apparatus of claim 7, further comprising a clock generator configured to generate a second clock signal different from the first clock signal when the first clock signal is received from the system through the first clock line that is unidirectional.

9. The apparatus of claim 8, further comprising a pull-down adjuster configured to disable signal transmission operations of the first data line and the second data line during a period in which the second clock signal is high.

10. The apparatus of claim 9, wherein the specific condition includes a time point at which the second clock signal ends.

11. The apparatus of claim 10, wherein, when a signal on the second data line is in a high state at the time point at which the second clock signal ends, the controller performs control such that the first data received through the first data line is transmitted to the one or more target devices through the second data line.

12. The apparatus of claim 11, wherein, when the signal on the second data line is in a low state at the time point at which the second clock signal ends, the controller performs control such that the second data received through the second data line is transmitted to the system through the first data line.

13. The apparatus of any one of claims 7 to 12, further comprising one or more detectors.

14. The apparatus of claim 13, wherein a first detector detects that a host device is driving when the first data line is low.

15. The apparatus of claim 14, wherein a second detector detects that a local device is not driving when the second data line is high.

16. The apparatus of claim 7, further comprising one or more data line output drivers.

17. The apparatus of claim 16, wherein a first data line output driver outputs a low signal to the first data line by controlling pull-down of a resistor.

18. The apparatus of claim 17, wherein a second data line output driver outputs a low signal to the second data line by controlling pull-down of a resistor.

19. The apparatus of any one of claims 7 to 18, further comprising a double data rate 5 (DDR5) memory,
wherein at least two different interfaces include at least one of an inter-integrated circuit (I2C) interface and an improved inter-integrated circuit (I3C) interface.

20. The apparatus of any one of claims 7 to 19, wherein the one or more target devices include at least one of a power management integrated circuit (PMIC) and a temperature sensor (TS).
